# EUROPEAN PATENT SPECIFICATION

(11) **EP 2 828 585 B1**
(45) Date of publication and mention of the grant of the patent: **10.10.2018**
(21) Application number: 13706565.2
(22) Date of filing: 01.03.2013
(51) Int. Cl.: F24F 11/00, F24F 13/06, F24F 13/10

(54) **TERMINAL APPARATUS, E.G. CEILING DIFFUSER OF A VENTILATION SYSTEM**
ENDGERÄTEVORRICHTUNG, Z. B. DECKENDIFFUSOR EINES BELÜFTUNGSSYSTEMS
APPAREIL TERMINAL, PAR EX. UN DIFFUSEUR DE PLAFOND D'UN SYSTÈME DE VENTILATION

(30) Priority: 23.03.2012 FI 20125330
(43) Date of publication of application: 28.01.2015
(73) Proprietor: FläktGroup Sweden AB, 551 84 Jönköping (SE)
(72) Inventor: HOKKANEN, Jari, FI-37800 Toijala (FI); LAHTI, Jarkko, FI-00380 Helsinki (FI); KAASALAINEN, Timo, FI-34110 Lakiala (FI)
(74) Representative: Heinänen Oy Patent Agency
(86) International application number: PCT/EP2013/054133
(87) International publication number: WO 2013/139572

(56) References cited:
- EP-A1- 1 347 249
- EP-A2- 0 774 628
- WO-A1-02/077539
- US-A1- 2003 146 291
- US-A1- 2006 243 814

## Description

The object of this invention is a terminal apparatus of a ventilation duct, via which the incoming air is directed into a room space or corresponding, and in which terminal apparatus the flow aperture leading into the room space is adjustable in height, and for which adjustment the terminal apparatus comprises an actuator, such as an electric motor.

The invention thus relates to a terminal apparatus of a ventilation system, with which air is supplied into a room space. One example of a terminal apparatus in which the invention can be utilized is a so-called ceiling diffuser. Thus in the following a ceiling diffuser is described, but the invention can also be utilized in other terminal apparatuses for ventilation.

The purpose of a ceiling diffuser or other corresponding terminal apparatus is that by means of it the desired quantity of air is brought into a room space insofar as possible without draughts such that the desired mixing is achieved. When supplying air to a room via a ceiling diffuser, one problem that often forms is that the flow length of the airflow depends on the magnitude and temperature of the air current. With small air currents and cold inlet air the throw length is small and correspondingly with large air currents and warm inlet air the throw length is large.

It is necessary to permanently place the air deflectors of diffusers in a manner such that in different operating modes sufficiently good mixing of the air is achieved in the room without however causing a feeling that there is a draught. Systems in which the quantity of the air current is controlled according to use, e.g. according to room temperature or CO2 content, might be particularly problematic.

A solution with the same objective as in this invention, i.e. directing air into a room space without draughts is known, e.g. according SE patent 520294 (Lindinvent AB). The air current coming from the ceiling diffuser is regulated according to this publication by means of different measured parameters, such as a pressure measurement. A drawback in this solution is the dependency on other system components and on the information obtained from them.

It has been endeavored to solve these problems with a ceiling diffuser according to Finnish patent application 20085187. In it an airflow velocity sensor is used as a sensor, which is installed in the ceiling diffuser in the flow aperture of the air current or in its immediate proximity. In a preferred embodiment the velocity sensor, the regulator and the motor controller are integrated into a circuit card, which is connected with a conductor to an electric motor, which opens and closes a moving plate, e.g. a separate deflector plate or diffuser plate, of the ceiling diffuser.

WO 02/077539 A1 discloses a terminal apparatus, i.e. a ceiling diffuser, of a ventilation duct via which terminal apparatus the incoming air is directed into a room space or corresponding, and in which ceiling diffuser the flow aperture leading into the room space is adjustable in height, and for which adjustment the terminal apparatus comprises an actuator.

The purpose of this invention is to achieve a more versatile and simpler terminal element of a ventilation system than before, with which air can be brought into a room space evenly and without draughts. A terminal apparatus according to the invention is disclosed in claim 1.

One preferred embodiment of the terminal apparatus according to the invention is characterized in that the terminal apparatus comprises a damper plate, to which the actuator is fixed.

One preferred embodiment of the terminal apparatus according to the invention is characterized in that the terminal apparatus comprises an air deflector, to which the shaft of the actuator is fixed.

Yet another preferred embodiment of the terminal apparatus according to the invention is characterized in that the damper plate, the actuator and the air deflector form a functional module, which is installed inside the terminal apparatus.

One of the advantages of the invention that can be mentioned is that a separate sensor is no longer needed for giving a signal. The actuator can be adjusted according to the selection in such a way that the diffuser maintains a constant throw length or constant air volume, i.e. there are two ways of using the same product. The functional module formed by the damper plate, the actuator and the flow shape part can easily be retrofitted into an existing constant volume diffuser.

In the following, the invention will be described in more detail by the aid of some preferred embodiments with reference to the attached drawings, wherein
Fig. 1 presents a partially sectioned side view of a ceiling diffuser according to the invention, when installed into position.
Fig. 2 presents a partially sectioned ceiling diffuser when installed into position, as viewed obliquely from below.

Although the focus here is on a ceiling diffuser, any other terminal apparatus whatsoever of a ventilation system, via which apparatus the airflow is directed into a room space or corresponding, can be relevant. The ceiling diffuser is generally round or rectangular in shape, e.g. of a square shape. Other shapes are also possible within the scope of the invention.

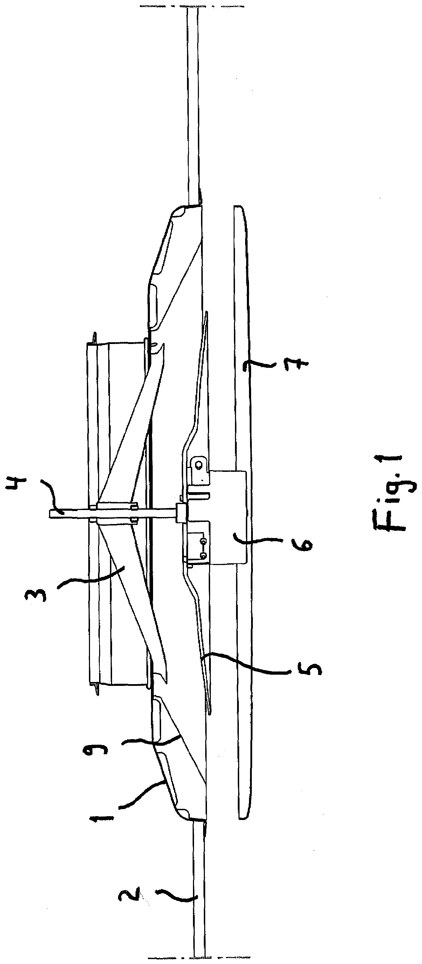

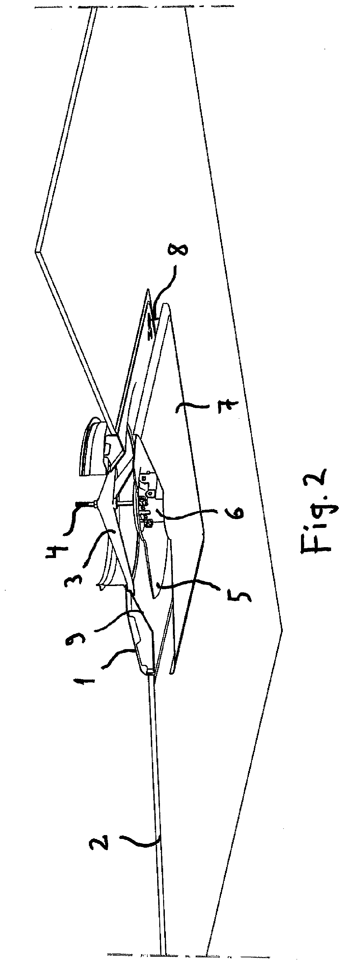

The body 1 of the ceiling diffuser is installed as an extension of the air duct 2 through an aperture made in the ceiling 2 in a manner that is in itself prior art. The trap through which the shaft 4 is taken is marked with the reference number 3. A damper plate 5 is connected to the shaft 4, to which damper plate an actuator 6, e.g. an electric motor, is fixed. In Fig. 1 the lowermost is the front plate 7 of the ceiling diffuser, which front plate is suspended on the body 1 of the ceiling diffuser with suspension means 8 (Fig. 2). In addition, the air deflector is marked with the reference number 9.

The flow aperture of the ceiling diffuser forms between the air deflector 9 and the damper plate 5. The flow aperture adjusts in such a way that the actuator rotates the damper plate, which thus moves upwards or downwards in a threaded spindle 4.

The actuator 6 is thus fixed to the damper plate 5. The shaft 4 of the actuator is in turn fixed to the air deflector 9, in which case these together form a functional module, which is installed inside the ceiling diffuser. The module can also easily be retrofitted into an existing constant volume diffuser.

A pressure difference sensor and control loop are integrated into the actuator 6. The actuator can be adjusted according to the selection in such a way that the ceiling diffuser maintains a constant throw length or constant air volume. The desired function can be selected from a selector or a switch (not presented) that is in connection with the actuator.

When it is desired to maintain a constant throw length, the apparatus detects by means of the pressure difference sensor an increase in the pressure of the ducting, in which case the damper plate 5 opens, trying to keep the velocity of the air in the gap of the damper plate constant. When the velocity of the air remains constant, also the throw length remains essentially constant. Correspondingly, when the velocity of the air decreases, the damper plate is closed.

The function wherein it is endeavored to maintain a constant air volume is based on the fact that when the pressure of the ducting increases the damper plate is closed and when the pressure decreases the damper plate is opened.

It is obvious to the person skilled in the art that the invention is not limited to the embodiments presented above, but that it can be varied within the scope of the claims presented below.

The characteristic features possibly presented in the description in conjunction with other characteristic features can if necessary be used separately to each other.

## Claims

1. Terminal apparatus of a ventilation duct via which terminal apparatus the incoming air is directed into a room space, and in which terminal apparatus the flow aperture leading into the room space is adjustable in height, and for which adjustment the terminal apparatus comprises an actuator (6), such as an electric motor, **characterized in that** two alternative functions are integrated into the terminal apparatus, in the first function of which the terminal apparatus maintains a constant throw length, and in the second function a constant air volume, **in that** these functions can be selected with a switch connected to the actuator, and **in that** a pressure difference sensor and control loop are integrated into the actuator (6).

2. Terminal apparatus according to claim 1, **characterized in that** the terminal apparatus comprises a damper plate (5) for adjusting the flow aperture, to which damper plate the actuator (6) is fixed.

3. Terminal apparatus according to claim 1 or 2, **characterized in that** the terminal apparatus comprises a shaft (4) and an air deflector (9), to which air deflector the shaft (4) of the actuator (6) is fixed.

4. Terminal apparatus according to claim 3, **characterized in that** the damper plate (5), the actuator (6) and the air deflector (9) form a functional module, which is installed inside the terminal apparatus.

5. Terminal apparatus according to any of claims 1-3, **characterized in that** the terminal apparatus is a ceiling diffuser.

## Patentansprüche

1. **Endvorrichtung** eines Lüftungskanals, durch die die ankommende Luft in einen Raum geleitet wird, und wobei die Strömungsöffnung der Endvorrichtung, die in den Raum führt, höhenverstellbar ist, und wobei die Endvorrichtung für das Verstellen einen Stellantrieb (6), z.B. einen Elektromotor, umfasst, **dadurch gekennzeichnet, dass** zwei alternative Funktionen in der Endvorrichtung integriert sind, wobei die Endvorrichtung innerhalb der ersten Funktion eine konstante Wurflänge beibehält und innerhalb der zweiten Funktion ein konstantes Luftvolumen beibehält, dadurch, dass die Funktionen durch einen Schalter, der mit dem Stellantrieb verbunden ist, auswählbar sind, und dadurch, dass ein Druckdifferenzsensor und ein Regelkreis in dem Stellantrieb (6) integriert sind.

2. Endvorrichtung nach Anspruch 1, **dadurch gekennzeichnet, dass** die Endvorrichtung eine Dämpferplatte (5) zum Verstellen der Strömungsöffnung umfasst, wobei der Stellantrieb (6) an der Dämpferplatte befestigt ist.

3. Endvorrichtung nach Anspruch 1 oder 2, **dadurch gekennzeichnet, dass** die Endvorrichtung eine Welle (4) und eine Luftlenkung (9) umfasst, wobei die Welle (4) des Stellantriebs (6) an der Luftlenkung befestigt ist.

4. Endvorrichtung nach Anspruch 3, **dadurch gekennzeichnet, dass** die Dämpferplatte (5), der Stellantrieb (6) und die Luftlenkung (9) eine funktionelle Baugruppe bilden, die in der Endvorrichtung eingebaut ist.

5. Endvorrichtung nach einem der Ansprüche 1 bis 3, **dadurch gekennzeichnet, dass** die Endvorrichtung ein Deckendiffusor ist.

## Revendications

1. Appareil terminal d'un conduit de ventilation, par lequel l'air entrant est dirigé jusque dans l'espace d'une pièce, dans lequel l'ouverture d'écoulement qui mène dans ledit espace est réglable en hauteur, et qui comprend pour ce réglage un actionneur (6) tel qu'un moteur électrique, **caractérisé en ce que** deux fonctions alternatives sont intégrées dans l'appareil terminal, ledit appareil terminal maintenant une portée constante, dans la première fonction, et un volume d'air constant, dans la seconde fonction, **en ce que** ces fonctions peuvent être sélectionnées avec un commutateur relié à l'actionneur, et **en ce qu'**un capteur de différence de pression et une boucle de commande sont intégrés dans l'actionneur (6).

2. Appareil terminal selon la revendication 1, **caractérisé en ce qu'**il comprend un registre (5) pour régler l'ouverture d'écoulement, auquel est fixé l'actionneur (6).

3. Appareil terminal selon la revendication 1 ou 2, **caractérisé en ce qu'**il comprend un axe (4) et un déflecteur d'air (9) auquel l'axe (4) de l'actionneur (6) est fixé.

4. Appareil terminal selon la revendication 3, **caractérisé en ce que** le registre (5), l'actionneur (6) et le déflecteur d'air (9) forment un module fonctionnel qui est installé à l'intérieur de l'appareil terminal.

5. Appareil terminal selon l'une quelconque des revendications 1 à 3, **caractérisé en ce que** l'appareil terminal est un diffuseur plafonnier.
